# EUROPÄISCHE PATENTSCHRIFT

(11) **EP 3 868 211 B1**
(45) Veröffentlichungstag und Bekanntmachung des Hinweises auf die Patenterteilung: **02.08.2023**
(21) Anmeldenummer: 20158401.8
(22) Anmeldetag: 20.02.2020
(51) Int. Cl.: A22C 13/00

(54) **VORRICHTUNG UND VERFAHREN ZUR HERSTELLUNG COEXTRUDIERTER PRODUKTE MIT VERÄNDERBARER DICKE DES HÜLLENMATERIALS**
DEVICE AND METHOD FOR PRODUCING COEXTRUDED PRODUCTS WITH VARIABLE THICKNESS OF CASING MATERIAL
DISPOSITIF ET PROCÉDÉ DE FABRICATION DE PRODUITS COEXTRUDÉS À ÉPAISSEUR VARIABLE DE LA MATIÈRE D'ENVELOPPE

(43) Veröffentlichungstag der Anmeldung: 25.08.2021
(73) Patentinhaber: Albert Handtmann Maschinenfabrik GmbH & Co. KG, 88400 Biberach (DE)
(72) Erfinder: Schliesser, Markus, 88489 Wain (DE); Baechtle, Manfred, 88433 Schemmerhofen (DE)
(74) Vertreter: Grünecker Patent- und Rechtsanwälte PartG mbB

(56) Entgegenhaltungen:
- US-A1- 2012 321 752
- US-A1- 2014 023 752

## Beschreibung

Die Erfindung betrifft ein Verfahren zum Herstellen eines Wurststrangs, eine entsprechend hergestellte Wurst, sowie eine Coextrusionsvorrichtung gemäß den Oberbegriffen der Ansprüche 1, 10 und 12.

Bei der Herstellung von coextrudierten Würsten wird die Hülle gemeinsam mit der Innenmasse extrudiert. Das Hüllenmaterial wird dabei als Gel, das zum Beispiel aus Alginat und/oder Kollagen sowie weiteren Bestandteilen besteht, auf den ausgestoßenen Brätstrang aufgetragen und anschließend z.B. mittels einer Salzlösung verfestigt, wie beispielsweise in der EP1371293B1 und der US 2012/321752 A1 beschrieben ist.

Alternativ kann auch das Hüllenmaterial auf ein Füllrohr extrudiert, darauf verfestigt und abgezogen werden, um mit dem Brät befüllt zu werden, wie beispielsweise in der EP2016830 beschrieben ist. Ziel ist es hier immer, eine Hülle mit möglichst gleichmäßiger Stärke auf den Brätstrom aufzubringen. Dabei kann die Menge an zugeführten Hüllenmaterial an die gewählte Hüllenstärke angepasst werden. Die Hüllenstärke ist abhängig von verschiedenen Einflussfaktoren und soll möglichst gleichmäßig aufgetragen werden. Vor dem Start der Produktion wird die Hüllenstärke einmalig auf die Produkt- und Prozessanforderungen eingestellt. Sie wird dabei in der Regel so dick gewählt, dass im Gesamtprozess keine Probleme auftreten, wie zum Beispiel Abriss des Produktionsstrangs während dem Füllprozess (zum Beispiel beim Einschnüren durch die Verdrängereinheit). Die Wursthülle soll auch ausreichend Stabilität bieten beim anschließenden Aufhängen der Wurstkette auf Haken, Rauchstöcken etc. Nachteilig bei dem bekannten Verfahren ist, dass die Hüllenmaterialstärke auf die am stärksten belastete Stelle ausgelegt wird. Dies ist teuer und nicht ressourcenschonend. Außerdem wird eine relativ dicke Hülle vom Verbraucher als unangenehm empfunden.

Hiervon ausgehend liegt der vorliegenden Erfindung die Aufgabe zugrunde, ein Verfahren und eine Vorrichtung bereitzustellen, die ein ressourcenschonendes, kostengünstiges und einfaches Herstellen eines Wurststrangs mittels Coextrusion ermöglichen, wobei gleichzeitig sichergestellt werden kann, dass im Gesamtprozess keine Probleme durch Beschädigung der Wursthülle auftreten.

Diese Aufgabe wird durch die Merkmale der Ansprüche 1, 10 und 12 gelöst.

Gemäß der vorliegenden Erfindung wird ein Wurststrang, der eine Hülle aufweist, die eine Innenmasse umgibt, mittels Coextrusion hergestellt. Dabei wird das Hüllenmaterial und die Innenmasse coextrudiert, d.h. beide Materialien werden in einer Coextrusionseinrichtung ausgestoßen. Das coextrudierte Hüllenmaterial verfestigt sich und umgibt dann die Innenmasse. Dabei kann, wie zuvor im Zusammenhang mit dem Stand der Technik beschrieben ist, das Hüllenmaterial entweder direkt auf die ausgestoßene Innenmasse aufgebracht werden oder zunächst auf das Füllrohr, wo es verfestigt wird und dann auf die ausgestoßene Innenmasse aufgebracht wird.

Gemäß der vorliegenden Erfindung wird bei der Erzeugung des Wurststrangs das Verhältnis des Volumenstroms des Hüllenmaterials zum Volumenstrom der Innenmasse entlang des Wurststrangs variiert, derart, dass die Hüllenmaterialstärke entlang des Wurststrangs variiert. Das bedeutet, dass man in Abhängigkeit unterschiedlicher Anforderungen an die Hülle an verschiedenen Stellen des Wurststrangs die Wursthüllenstärke entsprechend einstellen kann. Die Erfindung erlaubt also ein positionsabhängiges Anpassen der Menge an ausgestoßenem Hüllenmaterial. Wenn beispielsweise das Verhältnis vom Volumenstrom des Hüllenmaterials zum Volumenstrom der Innenmasse abnimmt, das heißt, weniger Hüllenmaterial ausgestoßen wird, ergibt sich eine dünnere Hüllenmaterialstärke, so dass ressourcenschonend produziert werden kann. Eine dünne Hülle hat beim späteren Verzehr des Produkts einen zarteren Biss zur Folge, was vom Verbraucher als angenehmer empfunden werden kann. An den Stellen, an denen mit einer stärkeren Beanspruchung zu rechnen ist, beispielsweise in einem Bereich, wo die Wurst abgeteilt wird oder eingeschnürt wird durch Verdrängereinheiten oder an Stellen, an denen der Wurststrang an Haken oder einem Rauchstock aufgehängt wird, kann dann der Volumenstrom des Hüllenmaterials im Vergleich zum Volumenstrom der Innenmasse erhöht werden, sodass eine dickere Hüllenmaterialstärke an diesen Stellen entsteht. Somit ermöglicht die vorliegende Erfindung, dass an den Stellen, an denen es notwendig ist, eine dicke Hüllenstärke gegeben ist, während an allen anderen Stellen ressourcenschonend eine dünnere Hüllenstärke produziert wird. Somit können erhebliche Kosten gespart werden.

Gemäß der vorliegenden Erfindung wird also die Hüllenmaterialstärke entlang des Wurststrangs in Abhängigkeit der benötigten Stabilität angepasst bzw. variiert. Somit kann ein Profil der Hüllenmaterialstärke erzeugt werden, das sich bei der Produktion periodisch wiederholt.

Unter Volumenstrom des Hüllenmaterials versteht man den Volumenstrom, der durch eine Extrusionsöffnung, insbesondere einen ringförmigen Extrusionsspalt austritt. Unter Volumenstrom der Innenmasse versteht man den Volumenstrom, der aus einem Füllrohr austritt.

Insbesondere wird die Hüllenmaterialstärke variiert, indem der Volumenstrom des Hüllenmaterials entsprechend variiert bzw. geregelt wird, während zum Beispiel der Volumenstrom der Innenmasse im Wesentlichen konstant gehalten wird. Entsprechendes lässt sich sehr einfach im laufenden Prozess realisieren.

Der Volumenstrom des Hüllenmaterials kann beispielsweise derart variiert werden, indem ein Pumpenantrieb für das Hüllenmaterial entsprechend geregelt wird, das heißt, der Sollwert für die Pumpenleistung in Abhängigkeit der Zeit oder in Abhängigkeit einer bestimmten Stelle am zu erzeugenden Wurststrang geregelt wird. Das heißt, dass an Stellen an denen die Hüllenmaterialstärke dicker sein soll, die Pumpe mehr fördert, derart, dass sich der Volumenstrom des Hüllenmaterials entsprechend erhöht.

Es ist aber alternativ oder zusätzlich auch möglich, die Größe der Öffnung einer Extrusionsdüse für das Hüllenmaterial entsprechend einzustellen bzw. zu regeln. Hier kann insbesondere die Breite eines Ringspalts der Extrusionsdüse entsprechend variiert werden. Die Größe der Öffnung und die Pumpleistung, die notwendig sind, um eine bestimmte Hüllenmaterialstärke zu erzielen, kann auch vorab empirisch bestimmt werden.

Die Hüllenmaterialstärke kann in einem Bereich zum Beispiel von 0,05 mm bis 0,4 mm variiert werden, insbesondere in einem Bereich von 0,1 mm bis 0,3 mm.

Vorteilhafterweise weist der erzeugte Wurststrang Abschnitte mit größerer Hüllenmaterialstärke und Abschnitte mit kleinerer Hüllenmaterialstärke auf, die sich abwechseln, wobei die Abschnitte mit größerer Hüllenmaterialstärke kleiner sein können als die Abschnitte mit kleinerer Hüllenmaterialstärke. Dies bringt den Vorteil mit sich, dass wesentlich Material gespart werden kann und tatsächlich nur an den Stellen, die eine höhere Belastung aufweisen, die Hüllenmaterialstärke erhöht ist. Vorzugsweise liegen die Abschnitte des Wurststrangs mit dickerem Hüllenmaterial in einem Bereich von e = 10 - 30 mm am Wurstende und die Abschnitte mit dünnerem Hüllenmaterial im mittleren Bereich der Wurst z.B. bei einem Wurstkaliber d von 8 mm bis 30 mm, insbesondere von 8 - 15 mm in einem Bereich von e ≈ 10 - 20 mm, bzw. bei einem Wurstkaliber von 15 mm bis 25 mm in einem Bereich von e ≈ 15 - 25 mm.

Gemäß einem bevorzugten Ausführungsbeispiel kann dabei der erzeugte Wurststrang in einzelne Würste unterteilt, zum Beispiel abgedreht oder über Verdrängereinheiten, die die Innenmasse verdrängen, unterteilt werden, wobei dann vorteilhafterweise die Abteilstellen in den Abschnitten mit größerer Hüllenmaterialstärke liegen.

Es ist auch möglich, dass der erzeugte Wurststrang an einer Aufhängeeinrichtung, insbesondere an Haken oder einem Rauchstock aufgehängt wird und die Aufhängebereiche des Wurststrangs, an denen der Wurststrang aufliegt, zum Beispiel an den Haken oder am Rauchstock in dem Abschnitt mit größerer Hüllenmaterialstärke liegt.

Es ist auch möglich, dass der Volumenstrom der Innenmasse variiert wird. Dazu wird das Förderwerk, beispielsweise die Flügelzellenpumpe einer Füllmaschine entsprechend geregelt. Wenn beispielsweise das Hüllenmaterial auf die Innenmasse extrudiert wird und der Volumenstrom der Innenmasse ansteigt, derart, dass die Ausstoßgeschwindigkeit des Wurststrangs erhöht wird, nimmt gleichzeitigt die Hüllenstärke ab, wobei wenn der Volumenstrom der Innenmasse reduziert wird und das Hüllenmaterial mit konstantem Volumenstrom zugeführt wird, die Hüllenmaterialstärke ansteigt.

Durch den variablen Ausstoß der Innenmasse ergibt sich auch folgender Vorteil. Bei Produkten mit niederviskosem Füllmaterial, die als fertiges Produkte anschließend aufgehängt werden (zum Beispiel Brühwurstprodukte) ergibt sich oft das Problem, dass sich bei hängenden Würsten die bei der Füllung erzeugte Zylinderform mit der Zeit verändert, da die Innenmasse in der Hülle sozusagen nach unten "rutscht" und dadurch das Produkt nicht mehr zylindrisch, sondern birnenförmig ist. Gemäß einem bevorzugten Ausführungsbeispiel der vorliegenden Erfindung kann beispielsweise dann, wenn der Wurststrang in einzelne Würste unterteilt wird, der Durchmesser der ausgestoßenen Innenmasse einer abgeteilten Wurst in eine Richtung hin abnehmen, wobei danach die unterteilten Würste in einer Richtung aufgehängt werden, derart, dass der Durchmesser der ausgestoßenen Innenmasse in einer Richtung von oben nach unten abnimmt. Wird also der Ausstoß der Innenmasse entsprechend variiert, so kann die dann "nicht zylinderförmig" ausgestoßene Innenmasse im anschließenden Aufhängeprozess sich so verteilen, dass dann eine im wesentlichen zylindrische Wurstform entsteht.

Aber auch bei konstantem Ausstoß der Innenmasse kann der Ausstoß bzw. der Volumenstrom des Hüllenmaterials so angepasst werden, dass diese unerwünschte Formänderung des Produkts verhindert werden kann indem im unteren Bereich der aufgehängten Wurst mehr und nach oben hin kontinuierlich weniger Hüllenmaterial auf die ausgestoßene Innenmasse aufgetragen wird.

Die vorliegende Erfindung ermöglicht also das Herstellen einer Wurst, bei der die Hüllenmaterialstärke der Wurst nicht konstant ist. Insbesondere weisen die gegenüberliegenden Endbereiche der Wurst, insbesondere die abgerundeten Wurstkuppen eine größere Hüllenmaterialstärke auf als ein mittlerer Bereich zwischen den Wurstenden, wobei vorzugsweise die Länge e eines Endbereichs 10 mm bis 30 mm von der Länge I der Wurst entspricht (bei einem Kaliber in einem Bereich von 8 mm - 30 mm). Dabei erstreckt sich die Länge I der Wurst von einer Spitze einer Wurstkuppe bis zur gegenüberliegenden Spitze der Wurstkuppe. Die Länge e des Endbereichs ist dabei so definiert, dass sie sich von der Spitze der Wurstkuppe in Axialrichtung bzw. Längsrichtung der Wurst erstreckt.

Die Erfindung betrifft auch eine Coextrusionsvorrichtung, insbesondere zum Durchführen des Verfahrens. Die Coextrusionsvorrichtung weist einen Coextrusionskopf auf zum Coextrudieren der Innenmasse und des Hüllenmaterials, wobei der Coextrusionskopf ein Füllrohr zum Ausstoßen der Innenmasse und eine dem Füllrohr zugeordnete Extrusionsdüse mit einer Extrusionsdüsenöffnung aufweist, insbesondere einen ringförmigen Extrusionsspalt. Dabei kann der Extrusionskopf derart ausgebildet sein, dass die Innenmasse auf das Füllrohr extrudiert wird und dort beispielsweise mittels Fixierlösung verfestigt oder aber, dass das Hüllenmaterial direkt auf die Innenmasse extrudiert wird und dort mittels Fixierlösung verfestigt. Die Coextrusionsvorrichtung umfasst eine Steuereinrichtung, die derart ausgebildet ist, dass bei der Erzeugung des Wurststrangs das Verhältnis des Volumenstroms des Hüllenmaterials zum Volumenstrom der Innenmasse entlang des Wurststrangs variierbar ist derart, dass die Hüllenmaterialstärke entlang des Wurststrangs variiert. Die Steuereinrichtung kann Teil einer Steuerung einer Füllmaschine sein in die die Coextrusionsvorrichtung integriert ist. Somit kann die Hüllenmaterialstärke positionsabhängig angepasst werden, und, wie bereits erläutert, kann auch eine unerwünschte Formänderung des Produkts gezielt durch Anpassen der Volumenströme verhindert werden.

Vorteilhafterweise umfasst die Coextrusionsvorrichtung eine Eingabeeinrichtung, die mit der Steuereinrichtung verbunden ist und über die ein Profil der Hüllenmaterialstärke entlang des zu erzeugenden Wurststrangs eingegeben werden kann. Somit können die Hüllenmaterialstärken gezielt an das Kaliber und die Länge der erzeugten Wurst angepasst werden oder aber bei Erzeugung eines Wurststrangs gezielt an eine entsprechende Aufhängeeinrichtung angepasst werden.

Die Coextrusionsvorrichtung kann Teil einer Füllmaschine sein, aber auch eine separate Einrichtung, die in einer Füllmaschine nachgerüstet werden kann, damit das erfindungsgemäße Coextrusionsverfahren durchgeführt werden kann.

Die Erfindung betrifft auch eine Füllmaschine mit einer entsprechenden Coextrusionsvorrichtung. Eine solche Füllmaschine weist beispielsweise ein Fülltrichter, ein Förderwerk zum Fördern der Innenmasse zum Füllrohr, eine Pumpe zum Fördern des Hüllenmaterials zur Extrusionsdüse auf. Darüber hinaus kann beispielsweise eine solche Füllmaschine auch noch eine Abteileinrichtung zum Unterteilen des Wurststrangs in Einzelwürste und eventuell eine Schneideinrichtung aufweisen.

Gemäß einem bevorzugten Ausführungsbeispiel kann der Volumenstrom oder die Konzentration einer Fixierlösung, die zum Fixieren des ausgestoßenen Hüllenmaterials auf das extrudierte Hüllenmaterial aufgebracht wird, an den Volumenstrom des Hüllenmaterials angepasst wird. Somit kann auch erheblich Fixierlösung gespart werden.

Die vorliegende Erfindung wird nachfolgend unter Bezugnahme folgender Figuren näher erläutert.
Figur 1 zeigt grob schematisch eine Füllmaschine gemäß einem ersten Ausführungsbeispiel der vorliegenden Erfindung.
Figur 2 zeigt grob schematisch ein weiteres Ausführungsbeispiel einer Füllmaschine gemäß der vorliegenden Erfindung.
Figur 3a zeigt grob schematisch ein Ausführungsbeispiel eines Coextrusionskopfs gemäß der vorliegenden Erfindung.
Figur 3b zeigt grob schematisch ein weiteres Ausführungsbeispiel eines Coextrusionskopfs gemäß der vorliegenden Erfindung.
Figur 3c zeigt grob schematisch ein weiteres Ausführungsbeispiel eines Coextrusionskopfs gemäß der vorliegenden Erfindung.
Figur 3d zeigt grob schematisch ein weiteres Ausführungsbeispiel eines Coextrusionskopfs gemäß der vorliegenden Erfindung.
Figur 4 zeigt grob schematisch einen Wurststrang und abgeteilte Würste mit unterschiedlichen Hüllenstärken gemäß der vorliegenden Erfindung.
Figur 5 zeigt grob schematisch Würste gemäß der vorliegenden Erfindung.
Figur 6 zeigt grob schematisch Würste nach dem Stand der Technik.

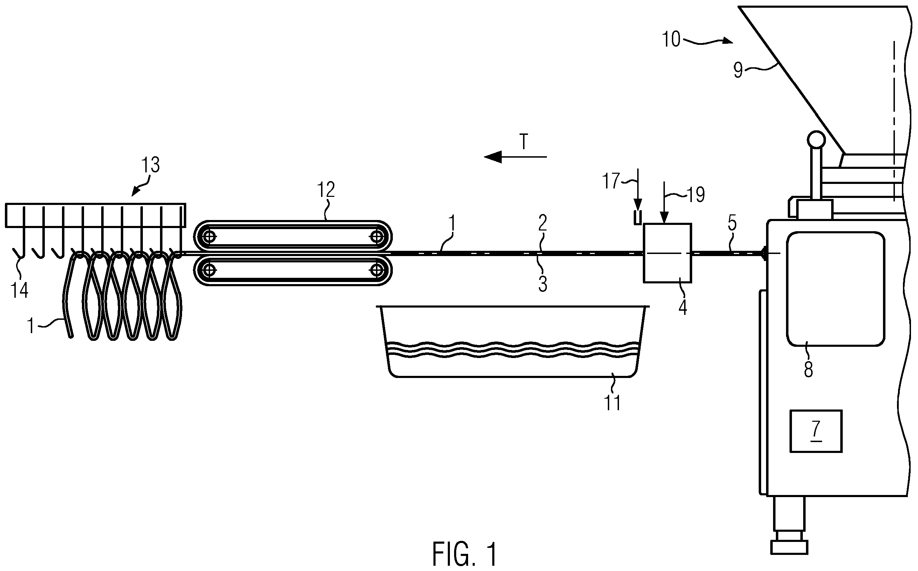

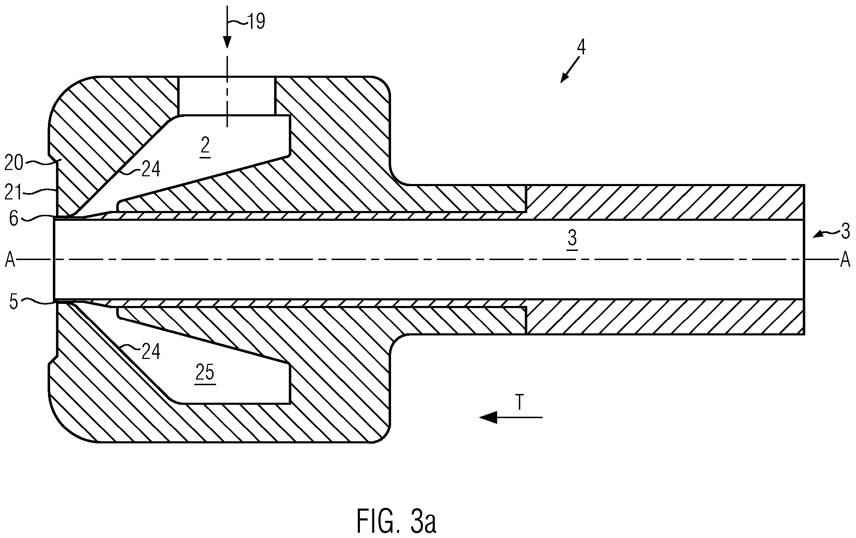

Figur 1 zeigt schematisch eine Ausführungsform gemäß der vorliegenden Erfindung. Figur 1 zeigt eine Füllmaschine 10 mit einem Fülltrichter 9, über den beispielsweise pastöse Masse wie Wurstbrät, Teig etc. eingefüllt werden kann und über ein nicht dargestelltes Förderwerk beispielsweise eine Flügelzellenpumpe zu einem Füllrohr 5 (siehe zum Beispiel Figur 3a) gefördert werden kann und über das Füllrohr zusammen mit einem Hüllenmaterial 2 extrudiert werden kann, um einen Wurststrang 1 zu erzeugen. Zum Verfestigen des Hüllenmaterials ist ferner eine Einrichtung 17 zum Verfestigen des Hüllenmaterials vorgesehen, d.h. zum Zuführen von Fixierlösung für das ausgestoßene Hüllenmaterial 2. Die Fixierlösung kann beispielsweise mittels einer Pumpe aus einem Vorratsbehälter zugeführt werden. Als Hüllenmaterial dient beispielsweise Alginatgel. Als Fixierlösung kann beispielsweise eine Calciumchloridlösung verwendet werden. Die Fixierlösung kann dann in dem Solebehälter 11 aufgefangen werden. Die Pumpe für die Fixierlösung ist ebenfalls über die Steuereinrichtung 7 ansteuerbar, derart, dass z.B. der Volumenstrom der Fixierlösung an den Volumenstrom des Hüllenmaterials angepasst werden kann. Alternativ oder zusätzlich kann auch die Konzentration der Fixierlösung, d.h. die Konzentration der in Wasser gelösten Fixiermittel, insbesondere Salze wie z.B. Calciumchlorid an den Volumenstrom des Hüllenmaterials angepasst werden indem die Fixierlösung entsprechend, z.B. mit Wasser verdünnt wird. Dann wird eine Dosiereinrichtung für Fixierlösung von der Steuerung 7 entsprechend angesteuert.

Dem Coextrusionskopf 4 kann eine Transporteinrichtung, hier ein Transportband 12 nachgelagert sein, um den coextrudierten Wurststrang 11 in Transportrichtung T zu fördern, um den Wurststrang dann an einer Aufhängeeinrichtung 13, die hier beispielsweise Haken 14 umfasst, aufzuhängen.

Der in Figur 1 gezeigte Coextrudierkopf 4 weist hier eine Zufuhr für das Hüllenmaterial 19 auf, das über eine nicht dargestellte Pumpe, die von einer Steuerung 7 angesteuert werden kann, zugeführt wird. Auch die Innenmasse wird beispielsweise über ein Füllrohr von dem nicht dargestellten Förderwerk der Füllmaschine 1 über das Füllrohr 5 zugeführt. Bei dem in Figur 1 gezeigten Ausführungsbeispiel wird der Wurststrang 10 nicht abgeteilt bzw. nicht abgedreht.

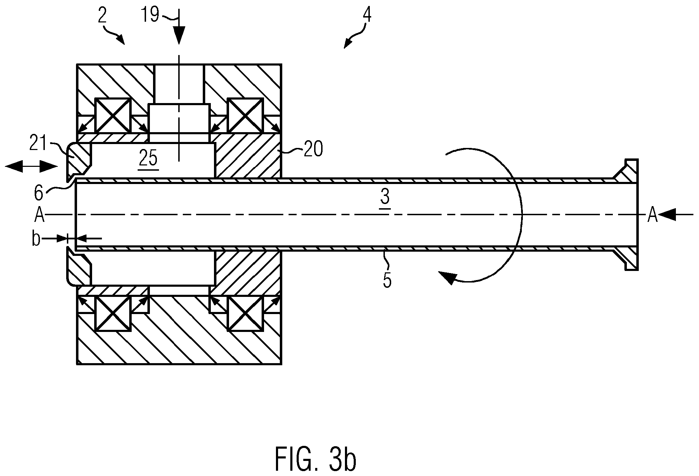

Figur 3b zeigt ein mögliches Ausführungsbeispiel für einen Coextrusionskopf zum Coextrudieren von Innenmasse 3 und Hüllenmaterial 2. Der Coextrusionskopf 4 umfasst das Füllrohr 5 sowie die Extrusionsdüse 20, die das Füllrohr 5 umgibt. Das Füllrohr 5 und die Extrusionsdüse 20 können in einem Gehäuse um die Längsachse A drehbar gelagert sein, damit z.B. der Wurststrang abgedreht werden kann. Die Extrusionsdüse 2 weist eine Extrusionsöffnung 6, hier einen ringförmigen Extrusionsspalt 6 auf, durch den das Hüllenmaterial 2 ausgestoßen werden kann. In diesem Ausführungsbeispiel wird das Hüllenmaterial 2 direkt auf die ausgestoßene Innenmasse 3 extrudiert. Es ist auch möglich, dass das Hüllenmaterial 2 auf das Füllrohr extrudiert wird und auf diesem aushärtet, wie beispielsweise in der EP1371293B1 beschrieben ist. Der Ringspalt 6 erstreckt sich im Wesentlichen radial zur Längsachse A des Füllrohrs 5, wobei die Wandung 21 mit dem freien Ende das Füllrohrs 5 im Wesentlichen abschließt.

Figur 3b zeigt eine Anordnung zum Einstellen der Öffnung des Ringspalts, bei der die Extrusionsdüse 20 eine Wandung 21 aufweist, die z.B. als Ringscheibe ausgebildet ist, die an ihrem Innenumfang das freie Ende des Füllrohrs 5 übergreift. Der dadurch zwischen dem übergreifenden Bereich der Wandung 21 und dem freien Ende des Füllrohrs 5 gebildete Ringspalt 6 erstreckt sich, wie in Figur 3b dargestellt ist, parallel zur Längsachse A des Füllrohrs 5. Die ringförmige Scheibe 21 bzw. Wandung 21 kann in axialer Richtung gleitverschieblich in den Extrudierkopf 4 eingesetzt sein. Durch axiales Verschieben der Ringscheibe 21 in Richtung des Doppelpfeils kann der sich ebenfalls in axialer Richtung erstreckende Ringspalt, d.h. der Abstand zwischen den übergreifenden Bereich der Ringscheibe 21 und dem freien Ende des Füllrohrs 21 verändert werden. Durch die Änderung der Extrusionsöffnung bzw. der Breite b des Ringspalts kann der Volumenstrom des Hüllenmaterials eingestellt werden. Die Bewegung der Wandung 21 bzw. das Einstellen der Breite b des Ringspalts kann also während des laufenden Betriebs erfolgen, z.B. durch axiales Verschieben der Ringscheibe 21 in der Extrusionsdüse 20 oder der gesamten Extrusionsdüse relativ zum Füllrohr oder durch axiales Verschieben des Füllrohrs 5.

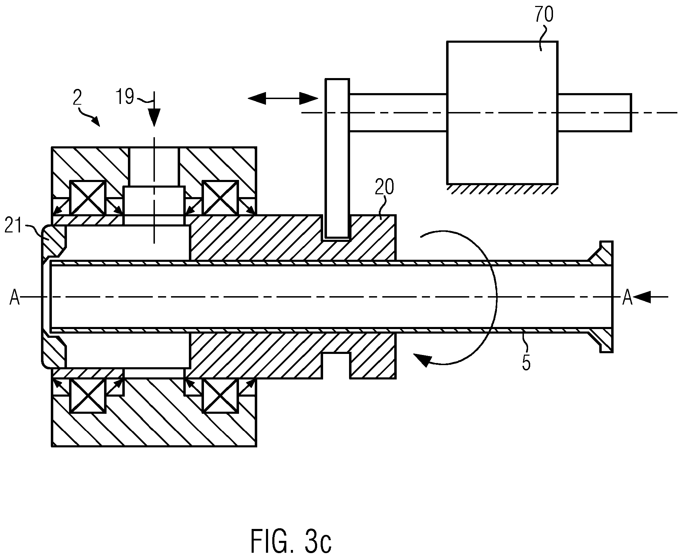

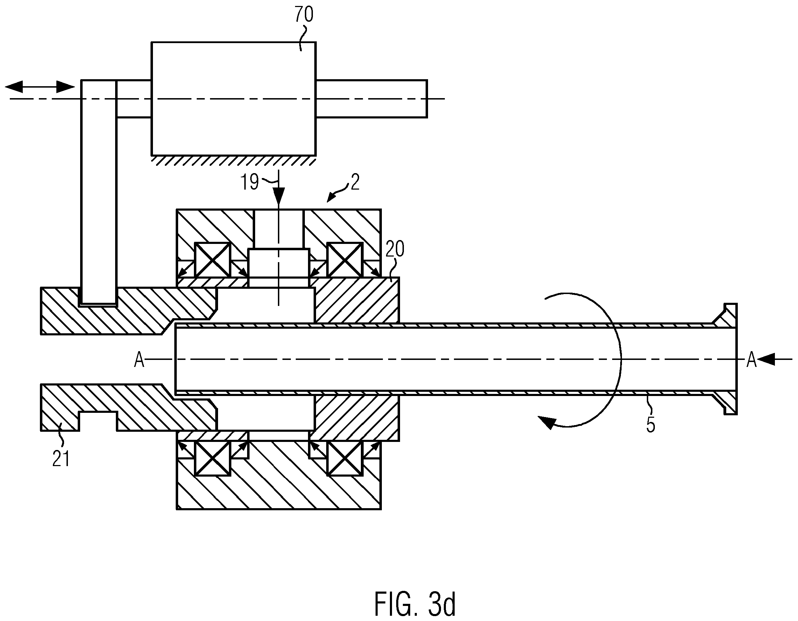

Fig. 3c zeigt beispielsweise einen solchen Mechanismus bei dem die Extrusionsdüse verschiebbar ist und z.B. die Ringscheibe fest mit der Extrusionsdüse verbunden ist. Fig. 3d zeigt einen Mechnamismus bei dem die Ringscheibe 21 innerhalb der Düse 20 verschiebbar ist.

Der jeweilige Mechanismus kann dann über die Steuereinrichtung 7 angesteuert werden und die Extrusionsöffnung variieren. Dabei kann die Steuereinrichtung insbesondere ein Stellglied 70 in Form eines Linearantriebs, z. B. eines Linearservomotors 70 ansteuern, der am Maschinengestell angeordnet ist und über den Aktor / Läufer z.B. die Ringscheibe 21 oder die gesamte Extrusionsdüse verschiebt.

Die Coextrusionsvorrichtung ist nun derart ausgebildet, dass die Steuereinrichtung 7, die in der Füllmaschine 10 integriert sein kann, derart ausgebildet sein kann, dass bei Erzeugung des Wurststrangs 1 das Verhältnis des Volumenstroms des Hüllenmaterials 2 zum Volumenstrom der Innenmasse 2 entlang des Wurststrangs 1 variierbar ist. Somit kann ein bestimmtes Hüllenmaterialstärkeprofil entlang des Wurststrangs 1 erzeugt werden. Über eine Eingabeeinrichtung 8 kann ein gewünschtes Profil der Hüllenmaterialstärke entlang des Wurststrangs eingegeben werden. Die Eingabeeinrichtung 8 kann dabei beispielsweise die Eingabeeinrichtung 8 der Füllmaschine sein. Die Steuereinrichtung 7 kann Teil der Steuereinrichtung der Füllmaschine sein. Gemäß diesem Ausführungsbeispiel kann also die Hüllenmaterialstärke variiert werden, indem der Volumenstrom des Hüllenmaterials, das über die Extrusionsöffnung 6 der Extrusionsdüse 20 ausgestoßen wird, geregelt werden.

Der Volumenstrom des Hüllenmaterials kann dabei variiert werden, indem die Leistung eines Pumpenantriebs, der Zufuhr 19 für das Hüllenmaterial entsprechend geregelt wird und / oder die Größe der Öffnung 6 der Extrusionsdüse 20 für das Hüllenmaterial, insbesondere die Breite b der ringförmigen Extrusionsöffnung 6 entsprechend eingestellt wird, wie beispielsweise in Zusammenhang mit Figur 3b erläutert wurde.

Die Hüllenmaterialstärke kann dabei in einem Bereich von 0,05 mm bis 0,4 mm variieren.

Der Volumenstrom des Hüllenmaterials kann dabei z.B. in einem Bereich von 0,1 l/min bis 6 l/min bei einer Extrusionsöffnung von 0,05 mm bis 0,4 mm betragen.

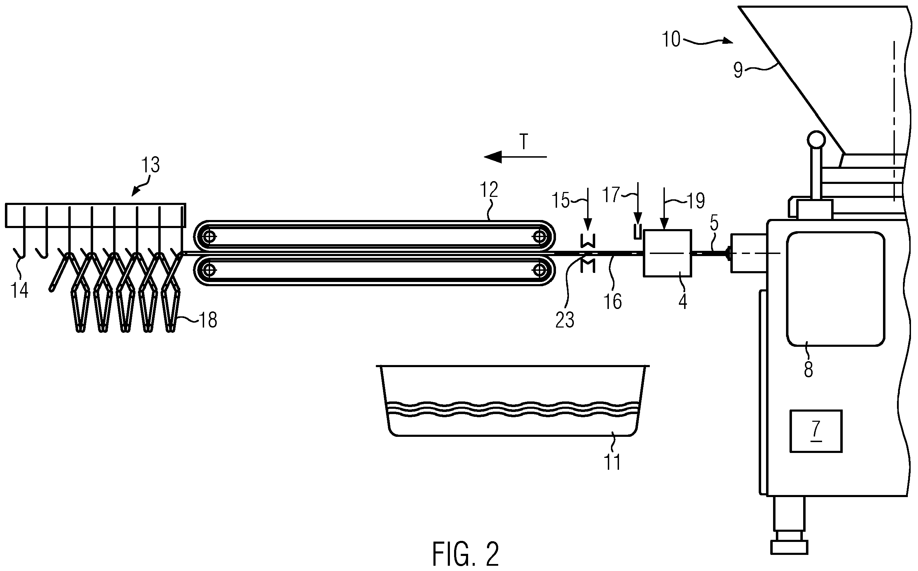

Figur 2 zeigt ein weiteres Ausführungsbeispiel, das dem in Figur 1 gezeigten Ausführungsbeispiel entspricht, wobei hier jedoch der erzeugte Wurststrang 1 über Abteilelemente 15 abgeteilt wird und wobei hier der Coextrusionskopf als Abdrehkopf ausgebildet ist, um den erzeugten Wurststrang um die Achse A zu drehen, um eine Abdrehstelle 23 im Wurststrang zu erzeugen. Somit können Einzelwürste 18 erzeugt werden.

Bei dem erfindungsgemäßen Verfahren kann also die Hüllenmaterialstärke entlang des Wurststrangs variiert werden. Zunächst wird ein Wurststrang 1 erzeugt, in dem Innenmaterial 2 zum Beispiel pastöse Masse über den Trichter 9 zugeführt wird und durch ein Förderwerk in das Füllrohr 5 geschoben wird. Im Coextrusionskopf 4 wird dann, wie beispielsweise aus den Figuren 3a und 3b hervorgeht, sowohl Innenmasse 3 als auch Hüllenmaterial 2 ausgestoßen. Das ausgestoßene Hüllenmaterial verfestigt sich durch Zuführen einer Fixierlösung über die Zufuhr 17. Der erzeugte Wurststrang 1 wird dann in Transportrichtung T über die Transporteinrichtung 12, hier die Transportbänder transportiert und beispielsweise aufgehängt. Bei dem in Figur 2 gezeigten Ausführungsbeispiel wird über die Abteilelemente 15 die Innenmasse verdrängt und über die im Coextrusionskopf 4 integrierte Abdreheinrichtung der erzeugte Wurststrang um die Achse A gedreht, derart, dass eine Abteilstelle 23 entsteht. Die Einzelwürste 18 werden ebenfalls in Transportrichtung T beispielsweise über die Transporteinrichtung 12 weitertransportiert und können dann auf der Aufhängeeinrichtung 13 aufgehängt werden.

Alternativ ist auch möglich, die Würste bereits jetzt in Einzelwürste zu unterteilen, beispielsweise mittels Abtrenneinrichtung (nicht dargestellt).

Vor Erzeugung des Wurststrangs wurde über die Eingabeeinrichtung 8 ein gewünschtes Profil für die Hüllenmaterialstärke eingegeben oder ist in einem Menu in der Steuereinrichtung abgespeichert. Gemäß einem Ausführungsbeispiel kann dabei beispielsweise die Hüllenmaterialstärke entlang des Wurststrangs variiert werden, indem der Volumenstrom des Hüllenmaterials entsprechend geregelt wird. Der Volumenstrom des Hüllenmaterials 2 kann variiert werden, indem der Pumpenantrieb für das Hüllenmaterial (nicht dargestellt) entsprechend geregelt wird. Alternativ oder zusätzlich kann auch die Größe der Öffnung 6 der Extrusionsdüse 20 entsprechend während der laufenden Produktion eingestellt bzw. geregelt werden, um den Volumenstrom entsprechend einzustellen. Die Größe der Öffnung der Extrusionsdüse 20 bzw. die entsprechende Pumpleistung zum Erzeugen eines bestimmten Volumenstroms, um eine gewünschte Hüllenmaterialstärke zu erreichen, kann beispielsweise empirisch bestimmt werden. Somit können gemäß der Erfindung Abschnitte mit größerer Hüllenmaterialstärke und Abschnitte mit kleinerer Hüllenmaterialstärke gefertigt werden, die sich abwechseln, wobei die Abschnitte mit größerer Hüllenmaterialstärke kleiner sein können als die Abschnitte mit kleinerer Hüllenmaterialstärke. Eine dickere Hüllenmaterialstärke verleiht dem Produkt mehr Stabilität. Dies ist an Stellen erforderlich, an denen das Produkt höheren Belastungen ausgesetzt ist. Das sind zum Beispiel Bereiche, an denen der Wurststrang abgedreht wird (siehe Figur 2) oder an Haken oder am Rauchstock aufgehängt wird (siehe Figur 1).

Dabei wird die Menge der Fixierlösung bei variierender Hüllenmaterialstärke zur Verfestigung angepasst, um eine ausreichende Menge an Fixierlösung, insbesondere an Calciumionen bereitzustellen.

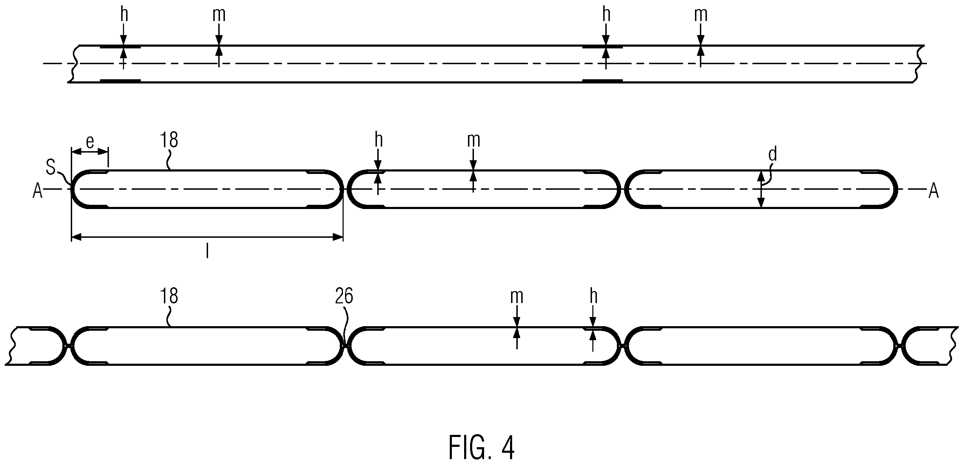

Figur 4 zeigt beispielsweise Würste 18 gemäß der vorliegenden Erfindung.

Die gegenüberliegenden Endbereiche der Wurst 18, insbesondere die abgerundeten Wurstkuppen weisen eine größere Hüllenmaterialstärke auf als ein mittlerer Bereich zwischen den Wurstenden, wobei vorzugsweise die Länge e eines Endbereichs z.B. 10 mm bis 30 mm, insbesondere bei einem Wurstkaliber d von 8 mm bis 30 mm. Insbesondere bei einem Wurstkaliber von 8 mm bis 15 mm liegt die Länge e in einem Bereich von e ≈ 10 - 20 mm, bzw. bei einem Wurstkaliber von 15 mm bis 25 mm in einem Bereich von e ≈ 15 - 25 mm, wobei die Länge I der Wurst sich von der Spitze S der Wurstkuppe bis zur gegenüberliegenden Spitze S der gegenüberliegenden Wurstkuppe erstreckt und die Länge des Endbereichs e sich von der Spitze S der Wurstkuppe aus in Axialrichtung A bzw. Längsrichtung der Wurst erstreckt.

Im oberen Bereich der Figur 4 sind bereits unterteilte Einzelwürste 18 gezeigt, während die unteren in Figur 4 gezeigten Würste 18 noch als Wurstkette zusammenhängen und über einen Wurstzopf 26 verbunden sind.

Wie aus Figur 4 hervorgeht, sind die Endbereiche verstärkt ausgebildet und weisen beispielsweise eine Hüllenmaterialstärke h in einem Bereich von 0,2 mm < h <=0,4 mm auf, während die mittleren Bereiche m zwischen den verstärkten Endbereichen dünner sind und nur eine Dicke in einem Bereich von 0,05 mm < m <= 0,2 mm aufweisen. Somit kann erheblich Hüllenmaterial eingespart werden. Gleichzeitig kann zwischen den Endbereichen das Produkt eine dünnere Hüllenmaterialstärke aufweisen, die beim späteren Verzehr des Produkts einen zarteren Biss zur Folge hat, was vom Verbraucher als angenehmer empfunden werden kann.

Auch beim im Zusammenhang mit Figur 1 gezeigten Ausführungsbeispiel weist der nicht abgeteilte Wurststrang wie in Fig. 4 dargestellt an den Aufhängestellen eine erhöhte Hüllenmaterialstärke h auf, die Abmessungen h und m liegen ebenfalls in den oben genannten Bereichen

Aber nicht nur durch Anpassen des Volumenstroms des Hüllenmaterials bei beispielsweise gleichbleibenden Volumenstrom der Innenmasse kann die Hüllenmaterialstärke angepasst werden. Entsprechendes kann auch erfolgen, wenn der Volumenstrom der Innenmasse variiert wird, da bei zunehmenden Volumenstrom der Innenmasse und beispielsweise gleichbleibenden Volumenstrom des Hüllenmaterials die Hüllenmaterialstärke abnimmt, wenn das Hüllenmaterial auf die Innenmasse extrudiert wird.

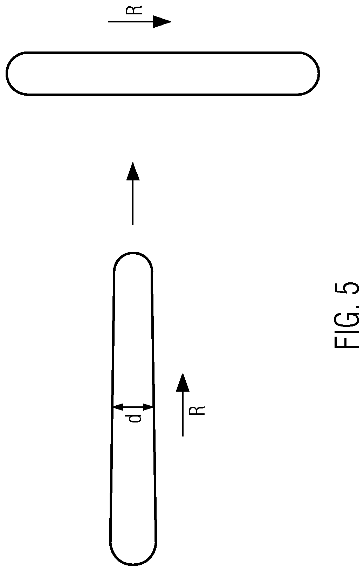

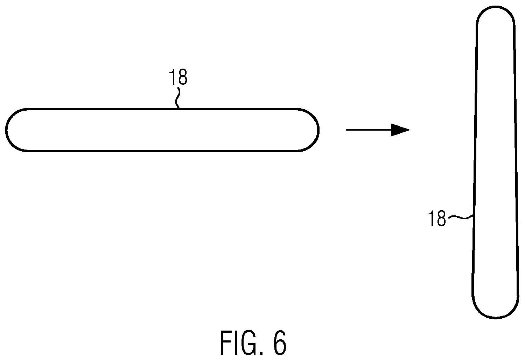

Wie in Figur 6 dargestellt ist, kann es im Stand der Technik vorkommen, dass sich bei niederviskosen Füllgütern, das heißt, niederviskosen Innenmassen 3, die als fertige Produkte anschließend aufgehängt werden (zum Beispiel Brühwurstprodukte) das Problem ergibt, dass abhängig vom Volumen (Durchmesser / Länge) und Gewicht das Problem auftreten kann, dass sich die hängende gefüllte Zylinderform mit der Zeit derart verändert, dass die Innenmasse in der Hülle teilweise nach unten rutscht und dadurch die Produkte nicht mehr zylindrisch sondern birnenförmig werden, wie in Figur 6 erkennbar ist. Wie in Figur 5 dargestellt wird, kann der Durchmesser d der ausgestoßenen Innenmasse einer abgeteilten Wurst 18 in einer Richtung R abnehmen, indem der Volumenstrom entsprechend verringert wird. Die unterteilten Würste werden dann in einer Richtung R aufgehängt, derart, dass der Durchmesser der ausgestoßenen Innenmasse in einer Richtung von oben nach unten abnimmt. Wird also hier der Ausstoß der Innenmasse entsprechend variiert, das heißt, der Volumenstrom entsprechend variiert, so kann die dann nicht-zylinderförmig ausgestoßene Innenmasse 3 im anschließenden Aufhängeprozess sich so verteilen, dass in etwa die typische zylindrische Wurstform entsteht, wie in Figur 5 dargestellt ist. Die durch das Aufhängen bedingte unerwünschte Formänderung wird sozusagen durch den variablen Volumenstrom kompensiert. Da dies abhängig ist von mehreren Parametern, wie zum Beispiel Temperatur, Viskosität der Innenmasse, Portionslänge und Durchmesser, etc. wird der Ausstoßverlauf, das heißt, Volumenstromverlauf dann in der Regel auf das jeweilige Produkt angepasst und kann z.B. über die Eingabeeinrichtung 8 eingestellt und gespeichert werden.

Aber auch bei konstantem Füllgutausstoß, das heißt, konstantem Volumenstrom der Innenmasse, kann der Ausstoß des Hüllenmaterials 2 so angepasst werden, dass diese unerwünschten Formänderungen des Produkts verhindert werden können, indem im unteren Bereich der aufgehängten Wurst mehr und nach oben hin kontinuierlich weniger Hüllenmaterial auf die ausgestoßene Innenmasse aufgetragen wird.

Gemäß der vorliegenden Erfindung kann also durch den variablen Ausstoß bzw. Volumenstrom der Innenmasse und/oder des Hüllenmaterials die Stärke des Hüllenmaterials positionsabhängig angepasst werden.

## Patentansprüche

1. Verfahren zum Herstellen eines Wurststrangs (1) mit einer von einer Hülle (2) umgebenen Innenmasse (3), wobei sowohl Hüllenmaterial (2) als auch Innenmasse (3) in einem Coextrusionskopf (4) coextrudiert werden und sich das extrudierte Hüllenmaterial (2) verfestigt, **dadurch gekennzeichnet, dass** bei der Erzeugung des Wurststrangs (1) das Verhältnis des Volumenstroms des Hüllenmaterials (2) zum Volumenstrom der Innenmasse (3) entlang des Wurststrangs (1) variiert wird derart, dass die Hüllenmaterialstärke entlang des Wurststrangs (1) variiert.

2. Verfahren nach Anspruch 1, **dadurch gekennzeichnet, dass** das erzeugte Profil der Hüllenmaterialstärke sich periodisch wiederholt.

3. Verfahren nach Anspruch 1 oder 2, **dadurch gekennzeichnet, dass** die Hüllenmaterialstärke variiert wird, indem der Volumenstrom des Hüllenmaterials (2) entsprechend variiert wird.

4. Verfahren nach Anspruch 3, **dadurch gekennzeichnet, dass** der Volumenstrom des Hüllenmaterials (2) variiert wird, indem ein Pumpenantrieb für das Hüllenmaterial (2) entsprechend geregelt wird und/oder die Größe der Öffnung einer Extrusionsdüse (20) für das Hüllenmaterial (2), insbesondere die Breite (b) eines Ringspalts der Extrusionsdüse (20), entsprechend eingestellt wird.

5. Verfahren nach mindestens einem der Ansprüche 1-4, **dadurch gekennzeichnet, dass** die Hüllenmaterialstärke in einem Bereich von 0,05 mm - 0,4 mm variiert.

6. Verfahren nach mindestens einem der Ansprüche 1-5, **dadurch gekennzeichnet, dass** sich beim erzeugten Wurststrang (1) Abschnitte mit größerer Hüllenmaterialstärke mit Abschnitten mit kleinerer Hüllenmaterialstärke abwechseln, wobei die Abschnitte mit größerer Hüllenmaterialstärke kürzer sein können als die Abschnitte mit kleinerer Hüllenmaterialstärke und wobei insbesondere bei unterteilten Würsten die Abschnitte des Wurststrangs mit dickerem Hüllenmaterial in einem Bereich am Wurstende und die Abschnitte mit dünnerem Hüllenmaterial im mittleren Bereich der Wurst liegen.

7. Verfahren nach Anspruch 6, **dadurch gekennzeichnet, dass** der erzeugte Wurststrang (1) in einzelne Würste unterteilt, insbesondere abgedreht wird und die Abteilstelle in dem Abschnitt mit größerer Hüllenmaterialstärke liegt, oder dass der erzeugte Wurststrang (1) an einer Aufhängevorrichtung (13), insbesondere an Haken oder einem Rauchstock aufgehängt wird, und die Aufhängebereiche des Wurststrangs (1), an denen der Wurststrang (1) auf dem jeweiligen Haken (14) aufliegt in dem Abschnitt mit größerer Hüllenmaterialstärke liegt.

8. Verfahren nach mindestens einem der Ansprüche 1-7, **dadurch gekennzeichnet, dass** der Volumenstrom der Innenmasse (3) variiert wird.

9. Verfahren nach Anspruch 5, **dadurch gekennzeichnet, dass** der Wurststrang (1) in einzelne Würste unterteilt, insbesondere abgedreht wird und der Durchmesser der ausgestoßenen Innenmasse (3) einer abzuteilenden Wurst (18) in eine Richtung abnimmt und die unterteilten Würste in einer Richtung aufgehängt werden, derart, dass der Durchmesser der ausgestoßenen Innenmasse (3) in einer Richtung von oben nach unten abnimmt.

10. Coextrusionsvorrichtung, insbesondere zum Durchführen des Verfahrens nach mindestens einem der Ansprüche 1-9, mit einem Coextrusionskopf (4) zum Coextrudieren der Innenmasse (3) und des Hüllenmaterials (2), wobei der Coextrusionskopf (4) ein Füllrohr (5) zum Ausstoßen der Innenmasse (3) und eine dem Füllrohr (5) zugeordnete Extrusionsdüse (20) mit einer Extrusionsdüsenöffnung, insbesondere einem ringförmigen Extrusionsspalt zum Ausstoßen des Hüllenmaterials (2) aufweist, **dadurch gekennzeichnet, dass** die Coextrusionsvorrichtung eine Steuereinrichtung (7) aufweist, die derart ausgebildet ist, dass bei der Erzeugung des Wurststrangs (1) das Verhältnis des Volumenstroms des Hüllenmaterials (2) zum Volumenstrom der Innenmasse (3) entlang des Wurststrangs (1) variierbar ist derart, dass die Hüllenmaterialstärke entlang des Wurststrangs (1) variiert.

11. Coextrusionsvorrichtung nach Anspruch 10, **dadurch gekennzeichnet, dass** die Coextrusionsvorrichtung eine Eingabeeinrichtung (8) aufweist, die mit der Steuerung verbunden ist und über die ein Profil der Hüllenmaterialstärke entlang des zu erzeugenden Wurststrangs (1) eingegeben werden kann.

12. Füllmaschine 10 mit einer Coextrusionsvorrichtung nach Anspruch 10 oder 11, sowie mit einem Fülltrichter (9), einem Förderwerk zum Fördern der Innenmasse (3) zum Füllrohr (5), und eine Pumpe zum Fördern des Hüllenmaterials (2) zur Extrusionsdüse (20).

13. Verfahren nach mindestens einem der Ansprüche 1-9, **dadurch gekennzeichnet, dass** der Volumenstrom oder die Konzentration einer Fixierlösung, die zum Verfestigen des ausgestoßenen Hüllenmaterials auf das extrudierte Hüllenmaterial aufgebracht wird, an den Volumenstrom des Hüllenmaterials angepasst wird.

## Claims

1. A method of producing a sausage strand (1) comprising an inner mass (3) encompassed by a casing (2), wherein both the casing material (2) and the inner mass (3) are coextruded in a coextrusion head and the extruded casing material (2) solidifies, **characterized in that**
during production of the sausage strand (1), the ratio of the volume flow of the casing material (2) to the volume flow of the inner mass (3) is varied along the sausage strand (1) such that the casing material thickness varies along the sausage strand (1).

2. The method according to claim 1, **characterized in that** the produced profile of the casing material thickness recurs periodically.

3. The method according to claim 1 or 2, **characterized in that** the casing material thickness is varied by suitably varying the volume flow of the casing material (2).

4. The method according to claim 3, **characterized in that** the volume flow of the casing material (2) is varied by controlling a pump drive for the casing material (2) accordingly and/or by adjusting the size of the opening of an extrusion die (20) for the casing material (2), in particular the width (b) of an annular gap of the extrusion die (20), in a suitable manner.

5. The method according to at least one of the claims 1 to 4, **characterized in that** the casing material thickness varies in a range of 0.05 mm - 0.4 mm.

6. The method according to at least one of the claims 1 to 4, **characterized in that** in the sausage strand (1) produced, sections of greater casing material thickness alternate with sections of smaller casing material thickness, wherein the sections of greater casing material thickness may be shorter than the sections of smaller casing material thickness and wherein, in particular in the case of divided sausages, the sausage strand sections having a thicker casing material are located in an area at the sausage end and the sections having a thinner casing material are located in the central area of the sausage.

7. The method according to claim 6, **characterized in that** the sausage strand (1) produced is divided into individual sausages, in particular by twisting-off, and that the division point is located in the section having the greater casing material thickness, or
that the sausage strand (1) produced is suspended from a suspension unit (13), in particular from hooks or a smoke stick, and that the suspension areas of the sausage strand (1), on which the sausage strand (1) rests on the respective hooks (14), are located in the section having the greater casing material thickness.

8. The method according to at least one of the claims 1 to 7, **characterized in that** the volume flow of the inner mass (3) is varied.

9. The method according to claim 5, **characterized in that** the sausage strand (1) is divided into individual sausages, in particular by twisting off, and the diameter of the ejected inner mass (3) of a sausage (18) to be divided decreases in one direction, and that the divided sausages are suspended in a direction such that the diameter of the ejected inner mass (3) decreases in a direction from top to bottom.

10. A coextrusion apparatus in particular for carrying out the method according to at least one of the claims 1 to 9, comprising
a coextrusion head (4) for coextruding the inner mass (3) and the casing material (2), wherein the coextrusion head (4) comprises a filling tube (5) for ejecting the inner mass (3) and an extrusion die (20) associated with the filling tube (5) and provided with an extrusion die opening, in particular an annular extrusion gap, for ejecting the casing material (2),
**characterized in that**
the coextrusion apparatus includes a control unit (7) which is configured such that
during production of the sausage strand (1), the ratio of the volume flow of the casing material (2) to the volume flow of the inner mass (3) is variable along the sausage strand (1) such that the casing material thickness varies along the sausage strand (1).

11. The coextrusion apparatus according to claim 10, **characterized in that** the coextrusion apparatus includes an input unit (8), which communicates with the control unit and through which a profile of the casing material thickness along the sausage strand (1) to be produced can be entered.

12. A filling machine 10 comprising a coextrusion apparatus according to claim 10 or 11, and further comprising a hopper (9), a conveying mechanism for conveying the inner mass (3) to the filling tube (5), and a pump for conveying the casing material (2) to the extrusion die (20).

13. A method according to at least one of the claims 1 to 9, **characterized in that** the volume flow or the concentration of a fixing solution, which is applied to the extruded casing material so as to solidify the ejected casing material, is adapted to the volume flow of the casing material.

## Revendications

1. Procédé de fabrication d'un boyau de saucisse (1) avec une masse intérieure (3) entourée d'une enveloppe (2), le matériau d'enveloppe (2) ainsi que la masse intérieure (3) étant coextrudés dans une tête de coextrusion (4) et le matériau d'enveloppe extrudé (2) se solidifiant, **caractérisé en ce que,** lors de la production du boyau (1), le rapport entre le débit volumique du matériau d'enveloppe (2) et le débit volumique de la masse intérieure (3) varie le long du boyau (1) de telle sorte que l'épaisseur du matériau d'enveloppe varie le long du boyau (1).

2. Procédé selon la revendication 1, **caractérisé en ce que** le profil généré de l'épaisseur du matériau de l'enveloppe se répète périodiquement.

3. Procédé selon la revendication 1 ou 2, **caractérisé en ce que** l'on fait varier l'épaisseur du matériau de l'enveloppe en faisant varier en conséquence le débit volumique du matériau de l'enveloppe (2).

4. Procédé selon la revendication 3, **caractérisé en ce que** l'on fait varier le débit volumique du matériau d'enveloppe (2) en réglant de manière correspondante un entraînement de pompe pour le matériau d'enveloppe (2) et/ou en réglant de manière correspondante la taille de l'ouverture d'une buse d'extrusion (20) pour le matériau d'enveloppe (2), en particulier la largeur (b) d'un interstice annulaire de la buse d'extrusion (20).

5. Procédé selon au moins l'une des revendications 1 à 4, **caractérisé en ce que** l'épaisseur du matériau de l'enveloppe varie dans une plage de 0,05 mm à 0,4 mm.

6. Procédé selon au moins l'une des revendications 1 à 5, **caractérisé en ce que**, dans le boyau (1) produit, des sections ayant une épaisseur de matériau d'enveloppe plus grande alternent avec des sections ayant une épaisseur de matériau d'enveloppe plus petite, les sections ayant une épaisseur de matériau d'enveloppe plus grande pouvant être plus courtes que les sections ayant une épaisseur de matériau d'enveloppe plus petite et, en particulier dans le cas de saucisses subdivisées, les sections du boyau ayant un matériau d'enveloppe plus épais se trouvant dans une zone à l'extrémité de la saucisse et les sections ayant un matériau d'enveloppe plus mince se trouvant dans la zone centrale de la saucisse.

7. Procédé selon la revendication 6, **caractérisé en ce que** le boyau de saucisse (1) produit est divisé en saucisses individuelles, en particulier subit une torsion et le point de division se trouve dans la section présentant une plus grande épaisseur de matériau d'enveloppe, ou **en ce que** le boyau de saucisse (1) produit est suspendu à un dispositif de suspension (13), en particulier à des crochets ou à un bâton de fumage, et les zones de suspension du boyau de saucisse (1), dans lesquelles le boyau de saucisse (1) repose sur le crochet (14) respectif, se trouvent dans la section présentant une plus grande épaisseur de matériau d'enveloppe.

8. Procédé selon au moins l'une des revendications 1 à 7, **caractérisé en ce que** l'on fait varier le débit volumique de la masse interne (3).

9. Procédé selon la revendication 5, **caractérisé en ce que** le boyau de saucisse (1) est divisé en saucisses individuelles, en particulier subit une torsion et le diamètre de la masse intérieure éjectée (3) d'une saucisse (18) à diviser diminue dans une direction et les saucisses divisées sont suspendues dans une direction, de telle sorte que le diamètre de la masse intérieure éjectée (3) diminue dans une direction de haut en bas.

10. Dispositif de coextrusion, notamment pour la mise en œuvre du procédé selon au moins l'une des revendications 1 à 9, comprenant une tête de coextrusion (4) pour coextruder la masse interne (3) et le matériau d'enveloppe (2), la tête de coextrusion (4) comprenant un tube de remplissage (5) pour éjecter la masse interne (3) et une filière d'extrusion (20) associée au tube de remplissage (5) et présentant un orifice de filière d'extrusion, en particulier une fente d'extrusion annulaire pour l'éjection du matériau d'enveloppe (2), **caractérisé en ce que** le dispositif de coextrusion présente un dispositif de commande (7) qui est conçu de telle sorte que, lors de la production du boyau (1), le rapport entre le débit volumique du matériau d'enveloppe (2) et le débit volumique de la masse intérieure (3) peut être modifié le long du boyau (1) de telle sorte que l'épaisseur du matériau d'enveloppe varie le long du boyau (1) .

11. Dispositif de coextrusion selon la revendication 10, **caractérisé en ce que** le dispositif de coextrusion comprend un dispositif d'entrée (8) qui est relié au système de commande et par l'intermédiaire duquel un profil de l'épaisseur du matériau d'enveloppe peut être entré le long du boyau de saucisse (1) à produire.

12. Machine de remplissage (10) présentant un dispositif de coextrusion selon la revendication 10 ou 11, ainsi qu'une trémie de remplissage (9), un mécanisme de transport pour transporter la masse intérieure (3) vers le tube de remplissage (5), et une pompe pour transporter le matériau d'enveloppe (2) vers la filière d'extrusion (20) .

13. Procédé selon au moins l'une des revendications 1 à 9, **caractérisé en ce que** le débit volumique ou la concentration d'une solution de fixation appliquée sur le matériau d'enveloppe extrudé pour solidifier le matériau d'enveloppe éjecté est adapté-e au débit volumique du matériau d'enveloppe.
